# EUROPÄISCHE PATENTANMELDUNG

(11) **EP 4 177 490 A1**
(43) Veröffentlichungstag der Anmeldung: **10.05.2023**
(21) Anmeldenummer: 21206731.8
(22) Anmeldetag: 05.11.2021
(51) Int. Cl.: F16C 27/06

(54) **LAGERELEMENT FÜR EINE ROTIERENDE WELLE, LEICHTMETALL-GUSSBAUTEIL UND ELEKTRISCHE MASCHINE**

(71) Anmelder: Siemens Aktiengesellschaft, 80333 München (DE)
(72) Erfinder: Schuh, Carsten, 85598 Baldham (DE); Vollmer, Rolf, 36129 Gersfeld (DE)
(74) Vertreter: Siemens Patent Attorneys

(57) **Zusammenfassung**

Die Erfindung betrifft ein Lagerelement (2) für eine rotierende Welle (4) umfassend einen Lagerring (6) und ein den Lagerring umgebendes Dämpfungselement (10), das von einem Gehäuse (8) und einem von dem Gehäuse umgebenen Dämpfungsmaterial (16) gebildet ist, wobei das Gehäuse (8) zumindest einen Innenring (12) und einen Außenring (14) aufweist und zwischen dem Innenring (12) und dem Außenring (14) das Dämpfungsmaterial (16) angeordnet ist. Die Erfindung zeichnet sich dadurch aus, dass das Dämpfungsmaterial (16) ein organisches Material umfasst, wobei das Dämpfungsmaterial (16) eine Temperaturbeständigkeit von mehr 150 °C aufweist und das Dämpfungselement (10) im Ganzen einen Elastizitätsmodul von mindestens 130 GPa und eine Streckgrenze R_{p0,2} von mindestens 330 MPa aufweist.

## Beschreibung

Die Erfindung betrifft ein Lagerelement für eine rotierende Welle nach dem Oberbegriff des Patentanspruchs 1 sowie ein Gussteil nach Patentanspruch 10 und eine elektrische Maschine nach dem Patentanspruch 12.

Bei rotierenden Maschinen wie beispielsweise elektrischen Maschinen weisen die Rotoren eine dynamisch sich ändernde Relativbewegung in radialer und auch axialer Richtung in Bezug auf die quasiruhenden Statoren bzw. Gehäuse auf. Diese Relativbewegungen können sowohl entlang der Rotorachse als auch dem Rotoraußenumfang unterschiedlich und sich dynamisch ändernd ausgebildet sein. De facto ändert sich somit dynamisch das jeweilige lokale Spaltmaß zwischen Rotor und Stator in jedem Ortspunkt auf der Rotoroberfläche.

Die Rotoren selbst bewegen sich dabei dynamisch mit unterschiedlichen Resonanzmoden, was bei elektrischen Maschinen im Wesentlichen durch die erzeugten elektromagnetischen Kräfte, die mechanischen Fliehkräfte (z. B. Unwuchten) und die dynamische Steifigkeit und Dämpfungseigenschaft von Rotor, Rotorlagerung im Gehäuse, dem Gehäuse selbst sowie der Lagerung des Gehäuses hervorgerufen und beeinflusst wird. Die mechanische Wirkkette kann dabei als Reihenschaltung folgender Elemente beschrieben werden. Zum einen wären dabei Toleranzen des Aufbaus von Rotor, Lager und Stator bzw. Gehäuse zu nennen. Hierunter fallen z. B. geometrische Toleranzen, Unwuchten, Lagerspiel, radiale unterschiedliche thermische Ausdehnungskoeffizienten, Exzentrizitäten, Steifigkeitsunterschiede usw. Hinzu kommen in radialer Richtung unterschiedliche elektromagnetische Felder und Induktivitäten sowie unterschiedliche lokale Erwärmungen des Gesamtaufbaus im Betrieb. Diese Einflussfaktoren führen zur Ausbildung einer resonanten dynamischen Eigenschwingung der Rotorachse für jeden spezifischen Ansteuerungs- und Lastfall. Die so erzeugten dynamischen Relativbewegungen der Rotorachse wirken über das Rotorlager und die Lagerbuchse in das Lagerschild des Motorgehäuses.

Aufgrund der so beschriebenen mechanischen Wirkungskette kommt es bei einer angeregten resonanten Eigenschwingung der Rotorachse zu mechanischen Schwingungen im Gehäuse und Gehäuselager, welche sich dann als Vibration in Form von Körperschall als auch in Form von akustischen Phänomenen wie Geräuschen bemerkbar machen.

Um Motorgeräusche und Schwingungen zu reduzieren, werden nach dem Stand der Technik folgende Maßnahmen umgesetzt. Z. B. werden träge Massen am Rotor eingesetzt, oder der Rotor wird überdimensioniert, sodass eine Verschiebung der Resonanzfrequenzen der mechanischen Komponenten in einen unkritischen Bereich erfolgt. Zum anderen ist der Einbau von Gummi-O-Ringen in den Lagersitz der Rotoren üblich. Auch das Anbringen passiver Dämpfungselemente für bestimmte Resonanzschwingungsbereiche sowohl am Rotor selbst als auch am Motorgehäuse bzw. an den Auflagern des Gehäuses ist üblich. Dabei haben diese beschriebenen Maßnahmen im Allgemeinen jedoch eine signifikante Reduktion der Lagersteifigkeit und/oder ein höheres relatives Spaltmaß zur Folge.

Die Aufgabe der Erfindung besteht darin, eine Verbesserung der Dämpfung der entstandenen Rotorschwingung herbeizuführen und damit eine Reduzierung der mechanischen Schwingungen und der Geräuschentwicklung am Motor zu erzielen.

Die Lösung der Aufgabe besteht in einem Lagerelement mit den Merkmalen des Patentanspruchs 1 sowie in einem Gussteil nach Anspruch 10 und in einer elektrischen Maschine mit den Merkmalen des Patentanspruchs 12.

Das Lagerelement für eine rotierende Welle gemäß Anspruch 1 umfasst einen Lagerring und ein den Lagerring umgebendes Dämpfungselement, das von einem Gehäuse und einem von dem Gehäuse umgebenen Dämpfungsmaterial gebildet ist. Dabei weist das Gehäuse zumindest einen Innenring und einen Außenring auf, wobei zwischen dem Innenring und dem Außenring das Dämpfungsmaterial angeordnet ist. Die Erfindung zeichnet sich dadurch aus, dass das Dämpfungsmaterial ein organisches Material umfasst, wobei das Dämpfungsmaterial eine Temperaturbeständigkeit von mehr als 150 °C aufweist und das Dämpfungselement im Ganzen einen Elastizitätsmodul von mindestens 130 GPa und eine Streckgrenze R_{p0,2} von mindestens 330 MPa aufweist. Die 0,2 Streckgrenze R_{p0,2} oder auch 0,2-%-Dehngrenze ist diejenige (einachsige) mechanische Spannung, bei der die auf die Anfangslänge der Probe bezogene bleibende Dehnung (d. h. plastische Dehnung, daher der Index p) nach Entlastung 0,2 % beträgt.

Das beschriebene Lagerelement führt zu einer hohen Dämpfung der durch die Welle übertragenen Schwingungen in der vorgesehenen Maschine auch unter stark wechselnden Einsatzbedingungen, also Änderungen der Drehzahl, der Last und des Drehmomentes sowie in der Umgebungstemperatur. Das beschriebene Lagerelement mit dem Dämpfungselement ist besonders gut geeignet, dies in ein Leichtmetallbauteil einzugießen, da das Dämpfungselement besonders temperaturstabil ist. Dies wird durch das schützende Gehäuse um das Dämpfungsmaterial herum gewährleistet. Ferner wird die notwendige axiale Beweglichkeit zur Kompensation der thermischen Ausdehnung eines Rotors bei einer elektrischen Maschine nicht behindert. Zudem wird auch eine verschleißbehaftete direkte Reibung von einzelnen Strukturelementen des Dämpfungselementes unterbunden, und somit kann eine genaue und reproduzierbare effektive Schwingungsdämpfung mit hoher Lebensdauer erzielt werden. Im Weiteren ist das beschriebene Lagerelement aufgrund der beschriebenen Ausgestaltung dazu geeignet, die Geräuschemission der Maschine zu reduzieren.

In einer weiteren Ausgestaltungsform weist das Gehäuse neben dem Innenring und dem Außenring axiale Begrenzungselemente auf. Hierdurch wird vermieden, dass das Dämpfungsmaterial zwischen dem Innenring und dem Außenring radial entweichen kann, und eine radiale Dämpfung wird somit verbessert. Dabei bilden die Gehäusebestandteile des Innenrings, des Außenrings sowie die genannten axialen Begrenzungselemente ein formschlüssiges, stoffschlüssig miteinander verbundenes Gehäuse und umschließen dabei einen Hohlraum. In diesen Hohlraum lässt sich das Dämpfungsmaterial besonders gut einbringen. Der geschlossene Hohlraum und das geschlossene Gehäuse insgesamt führen dazu, dass das Dämpfungsmaterial seine Dämpfungseigenschaften dreidimensional in alle Raumrichtungen auswirken kann.

Zur Erzielung der hohen mechanischen Steifigkeit, also des hohen Elastizitätsmoduls und der hohen Streckgrenze, sind die Gehäusebestandteile bevorzugt aus einem hochfesten Stahl gebildet. Dabei beziehen sich die mechanischen Eigenschaften des Dämpfungselementes im Ganzen auf die Gehäusebestandteile sowie auf die Zusammenwirkung mit dem in dem Hohlraum vorgesehenen Dämpfungsmaterial.

Das beschriebene Dämpfungsmaterial ist dabei in einer Ausgestaltungsform in einen metallischen Schaum eingebracht. Ein metallischer Schaum, bevorzugt auch aus einem hochfesten Stahl, ist besonders gut geeignet, die organischen Bestandteile des Dämpfungsmaterials aufzunehmen. Die Schaumstruktur an sich bildet dabei eine stützende Matrix und erhöht dabei sowohl den Elastizitätsmodul des gesamten Dämpfungselements als auch dessen Zugfestigkeit. Der metallische Schaum kann dabei ebenfalls von den beschriebenen Gehäuseelementen, also dem Innenring, dem Außenring und den axialen Begrenzungselementen umgeben sein. Diese können aber auch ein fester integraler Bestandteil des metallischen Schaums sein, beispielsweise kann der Schaum durch eine umgossene feste Schicht so ausgebildet sein, dass diese Oberfläche das Gehäuse und die funktionalen Bestandteile des Gehäuses bilden.

Das organische Material, das Teil des Dämpfungsmaterials ist, kann insbesondere durch anorganische Füllstoffe stabilisiert sein. Auf diese Weise kann ebenfalls eine Erhöhung der mechanischen Festigkeiten erfolgen.

Ein weiterer Bestandteil der Erfindung ist ein Leichtmetall-Gussbauteil, das ein Lagerelement nach einem der Ansprüche 1 bis 9 umfasst. Dabei ist das Lagerelement mindestens teilweise durch das Material des Gussbauteils umgossen. Das beschriebene Lagerelement ist aufgrund seiner Eigenschaften gut geeignet, um dies in ein Gießwerkzeug, beispielsweise ein Druckgießwerkzeug, einzulegen und mit flüssigem Leichtmetall, insbesondere einer Aluminiumlegierung oder einer Magnesiumlegierung, zu umgießen. Dies hat produktionstechnische Vorteile, da auf diese Weise das Lagerelement sicher und genau am richtigen Ort für das Gehäusebauteil positioniert ist. Insbesondere bei der Verwendung in einem Druckgießprozess kann so eine sehr toleranzarme Positionierung des Lagerelementes erfolgen.

Das Gussbauteil ist dabei in einer besonders vorteilhaften Ausgestaltungsform ein Lagerschild für eine elektrische Maschine. Das Lagerschild einer elektrischen Maschine, also eines Elektromotors oder eines Generators, weist dabei die höchsten mechanischen Anforderungen auf und die beschriebenen Vorteile des Lagerelementes kommen hier gut zum Tragen. Auf der anderen Seite sind das beschriebene Lagerelement und die Positionierung in einem Gussteil auch für andere Maschinenelemente geeignet. Beispielsweise kann das Lagerelement mit der beschriebenen Ausgestaltung auch als Lagerelement für einen Lagerstuhl einer Kurbelwelle oder die Lagerstühle einer Nockenwelle in einem Hubkolbenmotor Anwendung finden. Weitere Ausgestaltungsformen der Erfindung sowie weitere Merkmale werden anhand der folgenden Figuren näher beschrieben. Dabei handelt es sich um rein schematische Ausgestaltungsformen, die keine Einschränkung des Schutzbereiches darstellen.

Dabei zeigen:
- Figur 1: eine Explosionsdarstellung einer elektrischen Maschine im Allgemeinen mit einem Lagerschild, in dem das Lagerelement Anwendung findet,
- Figur 2: eine vergrößerte Darstellung des Lagerschildes, in dem das Lagerelement angeordnet ist,
- Figur 3: einen Querschnitt durch ein Lagerelement,
- Figur 4: einen Längsschnitt durch ein Lagerelement mit Welle,
- Figur 5: einen Längsschnitt durch ein Lagerelement mit Welle und axialen Begrenzungselementen.

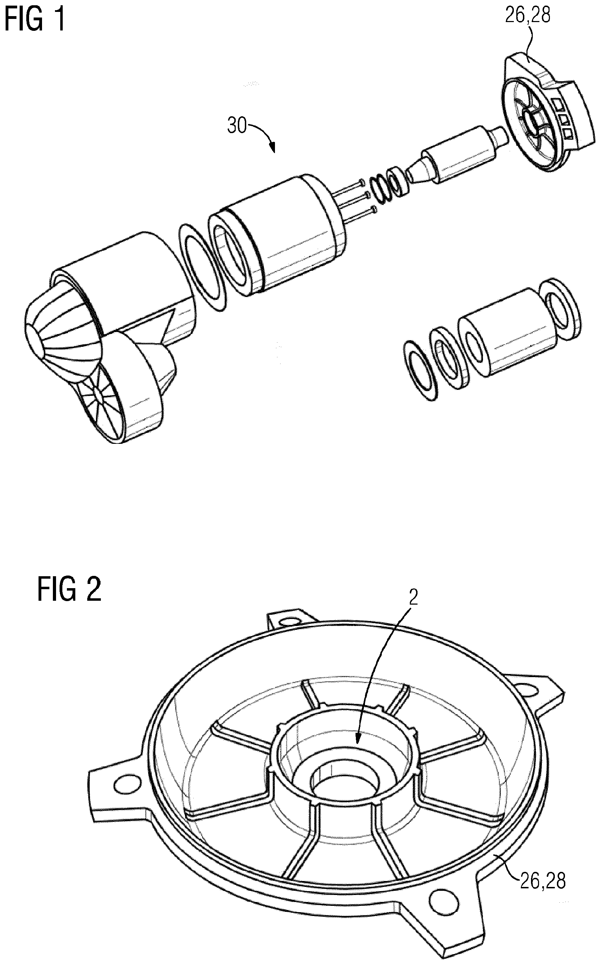

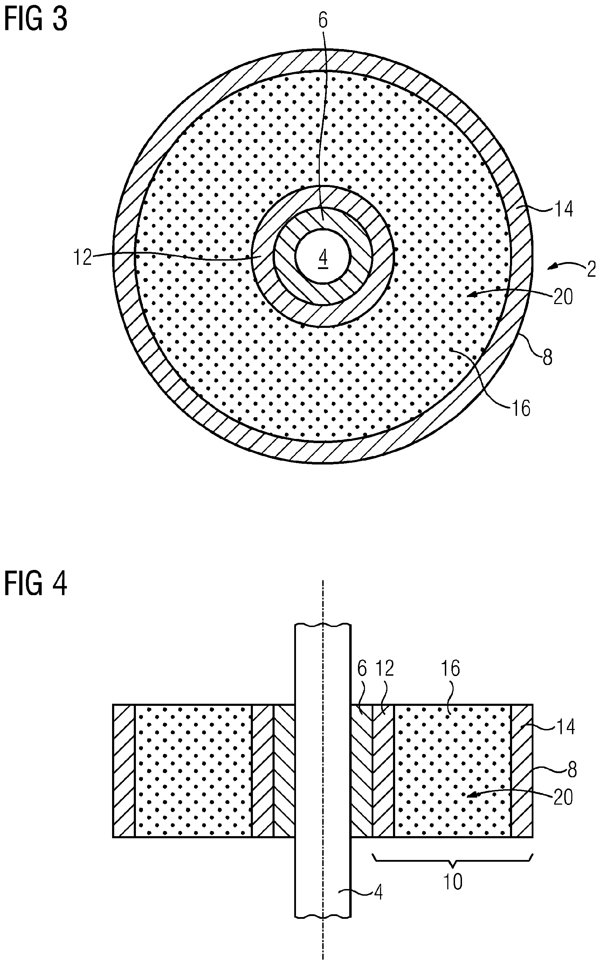

In Figur 1 ist eine Explosionsdarstellung einer elektrischen Maschine 30 in allgemeiner Form schematisch darstellt. Hierbei ist insbesondere der Augenmerk auf ein Gussteil 26 in Form eines Lagerschildes 28 gerichtet, in dem, wie in Figur 2 zu erkennen ist, ein Lagerelement 2 eingegossen ist, das in den weiteren Figuren 3 bis 5 näher beschrieben ist. Bei dem Gussteil 26 in Form eines Lagerschildes 28 handelt es sich rein exemplarisch um eine Ausgestaltung der Erfindung. Das beschriebene Lagerelement 2 kann auch in anderen hoch belasteten rotierenden Maschinen wie beispielsweise in einem Hubkolbenmotor als Nockenwellenlager oder als Kurbelwellenlager zum Einsatz kommen. Ein spezieller Vorteil des zu beschreibenden Lagerelementes 2 besteht darin, dass die verwendeten Materialien eine entsprechende Temperaturbeständigkeit aufweisen, die es ermöglicht, diese in einen Gießprozess zu integrieren. Dabei ist zu bedenken, dass beispielsweise in einem Druckgussvorgang eine Aluminiumlegierung mit einer Temperatur zwischen 500 und 700 °C flüssig in einen Hohlraum gegossen wird. Dabei herrscht bei Einlegeteilen, die bereits vor dem Gießen in einem Gießhohlraum platziert sind, wie beispielsweise das beschriebene Lagerelement 2, eine hohe Temperaturbelastung vor. Wie dieser Temperaturbelastung zu begegnen ist, wird im Weiteren noch beschrieben werden. Insbesondere bei der Verwendung von Leichtmetallen wie Magnesium oder Aluminium in Legierungsform, die in Strukturbauteilen angewendet werden und dabei zum Teil hoher mechanischer Belastung ausgesetzt sind, ist es stets eine Herausforderung, an mechanisch und tribologisch hoch belasteten Bauteilbereichen eine selektive Werkstoffauswahl vorzunehmen. Dies wird mit dem Lagerelement 2, das in Figur 3 beschrieben ist, in vorteilhafter Weise umgesetzt.

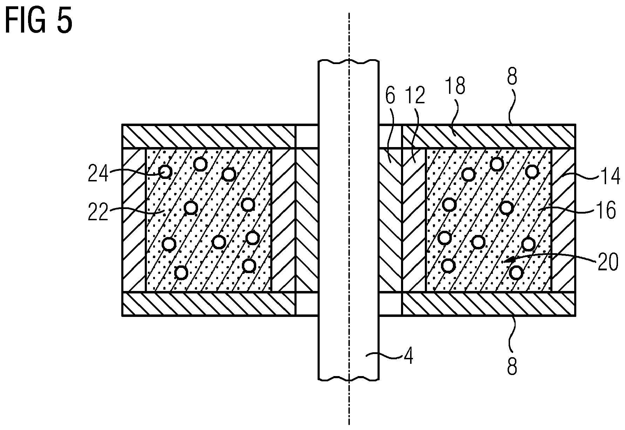

In Figur 3 ist ein Querschnitt durch das Lagerelement 2 gegeben, wobei das Lagerelement 2 sowohl einen Lagerring 6 umfasst, um den ein innerer Ring 12 sowie ein äußerer Ring 14 konzentrisch angeordnet sind. Das Lagerelement 2 umfasst dabei wiederum zwei Teilkomponenten, nämlich einerseits den Lagerring 6 und andererseits ein Dämpfungselement 10. Das Dämpfungselement 10 wiederum setzt sich aus dem inneren Ring 12, dem Dämpfungsmaterial 16 und dem äußeren Ring 14 sowie ggf. weiteren funktionalen Teilbauteilen zusammen. Dabei bilden sowohl der innere Ring 12 als auch der äußere Ring 14 und, wie in Figur 5 dargestellt, ggf. noch axiale Begrenzungselemente 18, ein Gehäuse 8 des Dämpfungselementes 10.

Zwischen dem inneren Ring 12 und dem äußeren Ring 14 ist zusätzlich ein Dämpfungsmaterial 16 eingebracht. Das Lagerelement umfasst demnach den Lagerring 6, den inneren Ring 12 und das Dämpfungsmaterial 16 um den äußeren Ring 14. Eine rotierende Welle 4 ist ebenfalls in der Figur 3 dargestellt, sie ist jedoch nicht Bestandteil des Lagerelementes an sich. Die rotierende Welle 4 ist hierbei die Rotorwelle der elektrischen Maschine 30 gemäß Figur 1. Grundsätzlich kann es sich hierbei jedoch auch um eine Nockenwelle oder um eine Kurbelwelle handeln. Die elektrische Maschine 30 kann auch als Generator sowie als Elektromotor ausgestaltet sein.

In Figur 4 ist ein Längsschnitt durch die Abbildung aus Figur 3 gegeben. Hierbei ist zu erkennen, dass der Lagerring 6 die Welle 4 als Gleitlager umgibt. In Figur 4 ist in der Querschnittsdarstellung gut zu erkennen, wie sich das Lagerelement 2 aus dem Lagerring 6 und dem Dämpfungselement 10 zusammensetzt. Das Dämpfungselement 10 ist dabei um den Lagerring 6 und somit auch um die Welle 4 radial angeordnet. Es nimmt Schwingungen der Welle 4, die auf den Lagerring 6 übertragen werden, auf und dämpft diese ab, bevor sie an das Gussteil 26 bzw. das Lagerschild 28 und somit im Weiteren auf die elektrische Maschine 30 in ihrer Gesamtheit weitergegeben werden.

In Figur 5 ist eine alternative Ausgestaltungsform des Lagerelementes gemäß Figur 4 gegeben, sie kann ebenfalls aus dem Querschnitt gemäß Figur 3 abgeleitet werden. Der wesentliche Unterschied zu dem Lagerelement 2 gemäß Figur 4 besteht darin, dass, wie bereits erwähnt, axiale Begrenzungselemente 18 so angeordnet sind, dass das Dämpfungsmaterial 16 zwischen den beiden Ringen 12 und 14 begrenzt ist. Das Dämpfungsmaterial 16 kann somit nicht zwischen den beiden Ringen 12 und 14 austreten, falls es bezüglich seiner Fließeigenschaften diese Neigung hätte. Ferner ist in Figur 5 rein schematisch dargestellt, dass das Dämpfungsmaterial 16 in einen metallischen Schaum 22 und in dessen Poren 24 eingebracht ist.

Im Weiteren soll näher auf das Dämpfungsmaterial 16 und seine Eigenschaften bzw. seine Zusammensetzung eingegangen werden. Das Dämpfungsmaterial 16 umfasst dabei zunächst ein organisches Material, das grundsätzlich mit anorganischen Füllstoffen oder weiteren Komponenten versehen sein kann. Gut geeignet sind dabei hochtemperaturbeständige Elastomere, Kautschuke oder Gummis wie zum Beispiel Polycarboxylate, Polysiloxane, Silikone oder Polyurethane. Diese lassen sich vorteilhaft mit anorganischen, festen, partikulären Füllstoffen wie Metallen und Metalllegierungen, zum Beispiel Wolfram, Molybdän, Kupfer, Eisen oder Stählen füllen. Auch Metalloxide wie Ceroxid, Bariumoxid oder Bismutoxid sind gute Füllstoffe. Dabei ist eine hohe spezifische Dichte dieser Füllstoffe von Vorteil für die Ausbildung von guten Dämpfungseigenschaften.

Auch fluororganische Verbindungen wie Polytetrafluorethylen, Polyimid und andere hochtemperaturbeständige Kunststoffe, hierunter sind Thermoplaste sowie Duroplaste zu verstehen, können ebenfalls unter Anwendung der beschriebenen Füllstoffe zweckmäßig als Dämpfungsmaterial 16 eingesetzt werden. Hierzu zählen im Weiteren auch hochtemperaturbeständige Silikone, die auch in der Leistungselektronik oder in Haushaltsgeräten wie zum Beispiel in Backöfen eingesetzt werden. Ferner sind silikatbasierte Hochtemperaturdichtmassen, zum Beispiel natriumsilikathaltige Fugen- und Dichtstoffe, die ebenfalls im Ofenbau Anwendung finden, als Dämpfungsmaterial 16 oder als Vormaterial hierfür geeignet. Ferner kann es auch zweckmäßig sein, hochtemperaturstabile Fluide und Suspensionen, beispielsweise auf der Basis von Silikonölen oder fluorierten Kohlenwasserstoffen auch in flüssiger oder hochviskoser Form als Dämpfungsmaterial 16 zum Einsatz zu bringen, wobei hierbei die axialen Begrenzungselemente 18 zum axialen Schließen des Gehäuses 8 erforderlich sind.

Die beschriebenen organischen Stoffe, die als Grundstoffe für das Dämpfungsmaterial 16 ggf. auch unter Zusatz von anorganischen Additiven zum Einsatz kommen, können je nach Beschaffenheit und Verarbeitbarkeit als monolithisches Dämpfungsmaterial 16 zwischen den Ringen 12 und 14 im Gehäuse 8 angeordnet sein. Sollten die Materialien des Dämpfungsmaterials 16 jedoch eine gewisse Viskosität aufweisen, kann es wie bereits beschrieben, zweckmäßig sein, die axialen Begrenzungselemente als Teil des Gehäuses 8 anzubringen, damit ein Ausfließen des Dämpfungsmaterials 16 aus dem Hohlraum 20 verhindert wird. Um das Austreten des Dämpfungsmaterials 16 aus dem Hohlraum 20 zu unterbinden, kann jedoch auch der Einsatz des bereits beschriebenen offenporigen metallischen Schaums 22, wie er in Figur 5 dargestellt ist, zweckmäßig sein. In diesem Fall kann das Grundmaterial des Dämpfungsmaterials 16 durch ein Gießverfahren ggf. auch unter erhöhtem Druck in den metallischen Schaum 22 eingebracht werden. Das Dämpfungsmaterial 16 liegt dabei in den Poren 24 des metallischen Schaums 22 vor, wobei der metallische Schaum 22 an sich als Stützstruktur dient und damit Teil des Dämpfungsmaterials 16 ist. Der metallische Schaum 22 kann dabei anschließend mit einer Ummantelung versehen werden, wobei die Ummantelung beispielsweise in Form einer Tauchbeschichtung oder mittels eines Sprühverfahrens aufgebracht wird. Dabei kann es sich ebenfalls sowohl um eine Kunststoffummantelung als auch um eine metallische oder keramische Ummantelung handeln. Grundsätzlich kann dann dieser metallische Schaum mit einer hier nicht dargestellten Ummantelung, die dann das Gehäuse 8 bilden kann, als Dämpfungselement 10 angesehen werden. Andererseits kann der metallische Schaum 22 ggf. auch mit einer Ummantelung in ein mechanisch separat zusammengesetztes Gehäuse 8, das wie beschrieben den inneren Ring 12, den äußeren Ring 14 und ggf. die axialen Begrenzungselemente 18 umfasst, eingesetzt werden.

Das gesamte Lagerelement 10, das also das Gehäuse 8 sowie das Dämpfungsmaterial 16 umfasst, weist dann für sich genommen in der Kombination der einzelnen Werkstoffe, die zusammen das Dämpfungselement 10 bilden, einen Elastizitätsmodul auf, der größer als 130 GPa ist, eine Streckgrenze R_{p0,2}, die größer als 330 MPa ist, wobei die Temperaturbeständigkeit größer als 150 °C ist. Vorteilhafterweise weist die Kurzzeittemperaturbeständigkeit des Lagerelementes für bis zu 30 Sekunden auch mindestens 500 °C, bevorzugt mindestens 750 °C auf. Dies ist, wie bereits erwähnt, für ein Einsetzen des Lagerelementes 2 in ein Druckgießwerkzeug und dem gleichzeitigen Umgießen mit flüssigem Metall zweckmäßig.

Um die hohen mechanischen Festigkeiten bezüglich des Elastizitätsmoduls und der Streckgrenze zu erreichen, ist es zweckmäßig, wenn das Gehäuse 8, also der innere Ring 12 und der äußere Ring 14 sowie ggf. die axialen Begrenzungselemente 18, aus einem hochfesten Stahl hergestellt sind. Das Gleiche gilt auch für das Material des metallischen Schaums 22. Selbstverständlich können auch andere hochfeste Materialen, wie beispielsweise Nickelbasislegierungen, zum Einsatz kommen, was jedoch für die Anwendung in Maschinen wie beispielsweise in der elektrischen Maschine 30 aus Kostengründen eher vermieden wird.

### Bezugszeichenliste

- 2: Lagerelement
- 4: rotierende Welle
- 6: Lagerring
- 8: Gehäuse
- 10: Dämpfungselement
- 12: Innenring
- 14: Außenring
- 16: Dämpfungsmaterial
- 18: axiale Begrenzungselemente
- 20: Hohlraum
- 22: metallischer Schaum
- 24: Poren
- 26: Gussbauteil
- 28: Lagerschild
- 30: elektrische Maschine

## Patentansprüche

1. Lagerelement (2) für eine rotierende Welle (4) umfassend einen Lagerring (6) und ein den Lagerring umgebendes Dämpfungselement, das von einem Gehäuse (8) und einem von dem Gehäuse umgebenen Dämpfungsmaterial (10) gebildet ist, wobei das Gehäuse (8) zumindest einen Innenring (12) und einen Außenring (14) aufweist und zwischen dem Innenring (12) und dem Außenring (14) das Dämpfungsmaterial (16) angeordnet ist, **dadurch gekennzeichnet, dass** das Dämpfungsmaterial (16) ein organisches Material umfasst, wobei das Dämpfungsmaterial (16) eine Temperaturbeständigkeit von mehr 150 °C aufweist und das Dämpfungselement (10) im Ganzen einen Elastizitätsmodul von mindestens 130 GPa und eine Streckgrenze R_{p0,2} von mindestens 330 MPa aufweist.

2. Lagerelement nach Anspruch 1, **dadurch gekennzeichnet, dass** das Gehäuse (8) neben dem Innenring (12) und dem Außenring (14) axiale Begrenzungselemente (18) aufweist.

3. Lagerelement nach Anspruch 2, **dadurch gekennzeichnet, dass** die Gehäusebestandteile Innenring (12), Außenring (14) und axiale Begrenzungselemente (18) formschlüssig oder stoffschlüssig miteinander verbunden sind und einen Hohlraum umschließen.

4. Lagerelement nach Anspruch 3 **dadurch gekennzeichnet, dass** der Hohlraum (20) durch das Dämpfungsmaterial (16) ausgefüllt ist.

5. Lagerelement nach einem der vorhergehenden Ansprüche, **dadurch gekennzeichnet, dass** die Gehäusebestandteile aus einem hochfesten Stahl gebildet sind.

6. Lagerelement nach einem der vorhergehenden Ansprüche, **dadurch gekennzeichnet, dass** das Dämpfungsmaterial (16) einen metallischen Schaum (22) umfasst.

7. Lagerelement nach Anspruch 6, **dadurch gekennzeichnet, dass** der metallische Schaum (22) aus einem hochfesten Stahl gebildet ist.

8. Lagerelement nach Anspruch 7, **dadurch gekennzeichnet, dass** Poren (24) des metallischen Schaums (22) mit dem organischen Material zumindest teilweise gefüllt sind.

9. Lagerelement nach einem der vorhergehenden Ansprüche, **dadurch gekennzeichnet, dass** das organische Material anorganische Füllstoffe umfasst.

10. Leichtmetall-Gussbauteil umfassend ein Lagerelement nach einem der Ansprüche 1 bis 9, **dadurch gekennzeichnet, dass** das Lagerelement (2) zumindest teilweise durch das Material des Gussbauteils (26) umgossen ist.

11. Gussbauteil nach Anspruch 10, **dadurch gekennzeichnet, dass** das Gussbauteil (26) ein Lagerschild (28) für eine elektrische Maschine (30) ist.

12. Elektrische Maschine umfassend ein Gussbauteil (26) in Form eines Lagerschildes (28) nach Anspruch 11.
